# EUROPÄISCHE PATENTSCHRIFT

(11) **EP 1 507 105 B1**
(45) Veröffentlichungstag und Bekanntmachung des Hinweises auf die Patenterteilung: **13.02.2008**
(21) Anmeldenummer: 04018317.0
(22) Anmeldetag: 03.08.2004
(51) Int. Cl.: F16H 63/30

(54) **Wechselgetriebe, insbesondere automatisiertes Schaltgetriebe für ein Kraftfahrzeug**
Change speed gear especially automated vehicle gearbox
Engrenage à changement de vitesse, notamment boite de vitesses automatisée pour un véhicule

(30) Priorität: 12.08.2003 DE 10336969
(43) Veröffentlichungstag der Anmeldung: 16.02.2005
(73) Patentinhaber: DR. ING. H. C. F. PORSCHE AKTIENGESELLSCHAFT, 70345 Stuttgart (DE)
(72) Erfinder: Höbel, Peter, Dipl.-Ing. (FH), 75242 Neuhausen (DE); Kurrle, Frank, Dipl.-Ing., 74385 Pleidelsheim (DE)

(56) Entgegenhaltungen:
- EP-A- 0 695 892
- DE-A1- 10 018 850
- DE-A1- 10 051 352
- DE-B- 1 131 521
- US-A- 4 529 080
- US-A- 4 770 280
- US-A1- 2002 139 215
- PATENT ABSTRACTS OF JAPAN Bd. 010, Nr. 146 (M-482), 28. Mai 1986 (1986-05-28) -& JP 61 002953 A (AISHIN SEIKI KK), 8. Januar 1986 (1986-01-08)

## Beschreibung

Die Erfindung betrifft ein Wechselgetriebe, insbesondere automatisiertes Schaltgetriebe für ein Kraftfahrzeug gemäß den Merkmalen des Oberbegriffs des Patentanspruchs 1.

Aus der DE 100 51 352 A1 ist eine Schalteinrichtung für ein Getriebe eines Kraftfahrzeuges bekannt, bei der die in die Schaltmuffe eingreifende Schaltgabel über einen Schlitten längs verschiebbar ist. Die Schaltgabel ist dabei auf einer Schaltachse befestigt, die in einem Gehäuse längsverschieblich gelagert ist. Für eine Unterstützung des Synchronisierungsvorganges zwischen Schaltmuffe und Gangrad stützt sich der Schlitten für beide Bewegungsrichtungen der Schaltgabel über lediglich eine Feder gegenüber der Schaltstange ab.

Aufgabe der Erfindung ist es, eine derartige gattungsgemäße Schaltaktuatorik hinsichtlich ihrer konstruktiven Ausführung dahingehend zu verbessern, dass u.a. auch die beim Komprimieren der Feder gespeicherte potentielle Energie wirkungsvoll für eine Beschleunigung bzw. Verbesserung des Synchronisierungsvorganges genutzt werden kann.

Die Aufgabe wird durch die im Anspruch 1 aufgeführten Merkmale gelöst.

Dadurch, dass erfindungsgemäß sowohl der Schaltschlitten als auch das für beide Betätigungsrichtungen vorgesehene Schaltfederelement auf der Schaltgabel gelagert sind, wird ein insbesondere für ein automatisiertes Schaltgetriebe erforderlicher platzsparender Aufbau erreicht, bei dem darüber hinaus der Schaltschlitten ohne größere Reibungsverluste in beide Richtungen längs verschiebbar ist.

Durch die in den Unteransprüchen aufgeführten Maßnahmen sind vorteilhafte Ausgestaltungen und Weiterbildungen des Wechselgetriebes möglich. Für die Lagerung des Schaltschlittens auf der Schaltgabel weist die Schaltgabel einen rohrförmigen Fortsatz auf, auf dem sowohl der Schaltschlitten als auch das Schaltfederelement gelagert sind.

Für eine lagesichere Aufnahme des Schaltfederelementes sind an seinen beiden stirnseitigen Enden jeweils ein Federsitzring vorgesehen. Der Schaltschlitten ist zweiteilig aufgebaut und besteht aus einem Grundkörper und einem Verschlusselement, das beispielsweise durch eine Verschraubung am Grundkörper befestigt ist. Mit diesem Aufbau wird ein montagefreundlicher Zusammenbau der Schaltaktuatorik gewährleistet.

Das Schaltfederelement stützt sich auf vorteilhafte Art und Weise zwischen einer Anschlagfläche der Schaltgabel und dem Verschlusselement des Schaltschlittens ab.

Der Schaltschlitten wird hydraulisch angesteuert; dazu weist der Schaltschlitten eine Ausnehmung auf, in die ein Hydraulikkolben eingreift.

Die auf der Schaltstange längs verschieblich angeordneten Schaltgabeln weisen in den beiden Enden des rohrförmigen Fortsatzes jeweils eine Lagerbuchse auf; damit ist auch zwischen Schaltgabel und Schaltstange eine reibungsarme Relativbewegung möglich. Der insbesondere für ein automatisiertes Schaltgetriebe vorgesehene Aufbau der Schaltaktuatorik zeichnet sich dadurch aus, dass sämtliche Synchronisierungseinheiten auf der Getriebeausgangswelle vorgesehen sind und somit sämtliche Schaltgabeln auf einer Schaltstange gelagert werden können. Damit wird der Anforderung eines kompakt bauenden automatisierten Schaltgetriebes Rechnung getragen.

Um eine wirkungsvolle Unterstützung der Synchronisierung durch das verwendete Schaltfederelement zu erreichen, ist die Steifigkeit des Schaltfederelementes und die durch den hydraulischen Kolben aufgebrachte Schaltkraft so ausgelegt, dass der Federweg des Schaltfederelementes maximal 5 mm beträgt.

Die durch die vorgespannte Feder gespeicherte potentielle Energie, die nach dem Synchronisierungsvorgang freigegeben wird, bewirkt, dass die Schaltgabel beschleunigt wird, so dass die Zeit für einen Gangwechsel insgesamt verkürzt werden kann.

Ein Ausführungsbeispiel der Erfindung ist in der Zeichnung dargestellt, und wird nachfolgend näher erläutert.

Es zeigen
- Fig. 1: einen Querschnitt durch einen Teil eines automatisierten Schaltgetriebes,

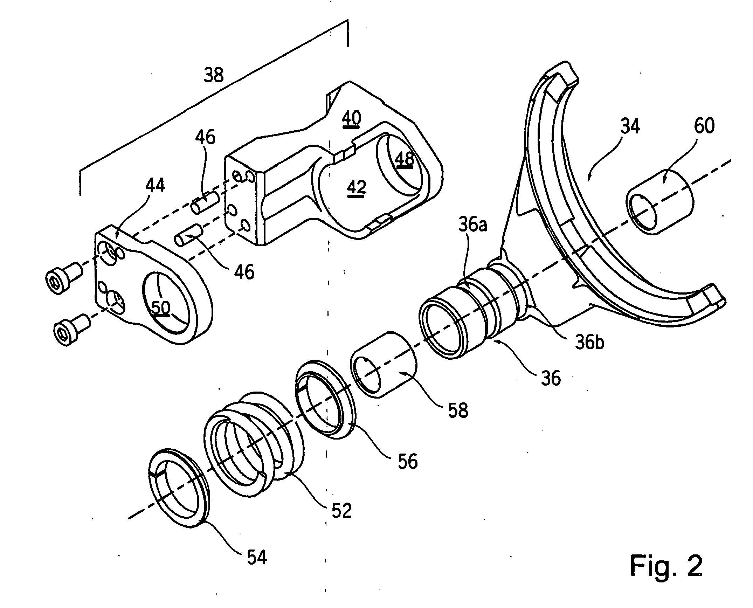

- Fig. 2: den Aufbau einer Schaltaktuatorik in einer Explosionsdarstellung,
- Fig. 3: die Darstellung einer Schaltaktuatorik im zusammengebauten Zustand und
- Fig. 4 bis 6: Diagramme zur Darstellung des Synchronisierungsvorganges.

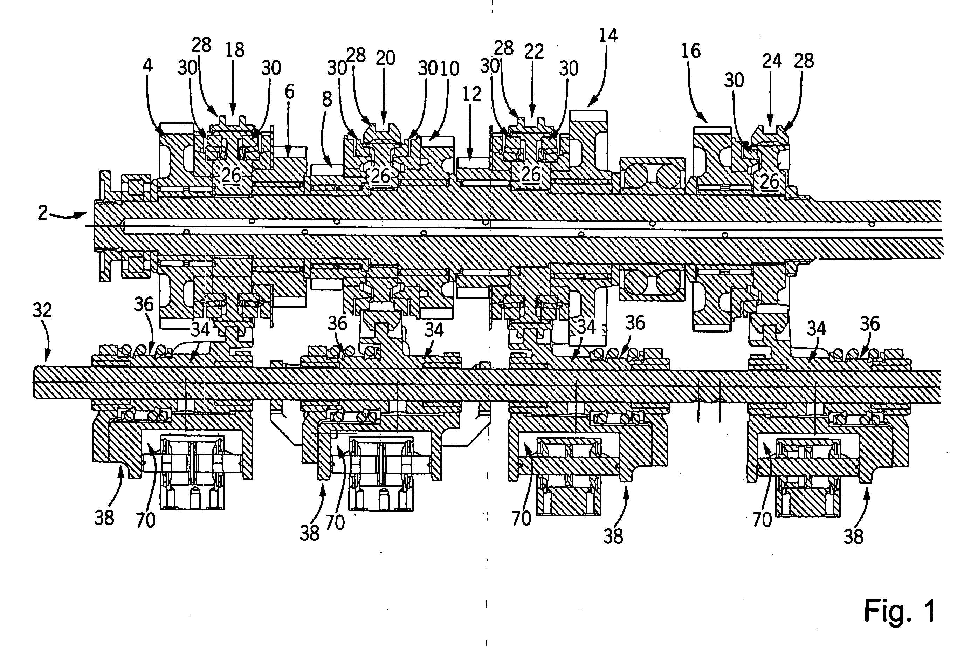

In Fig. 1 ist eine Getriebeausgangswelle 2 dargestellt, auf der sieben verschiedene Zahnräder 4 bis 16 drehbar gelagert sind. Diese Schaltzahnräder 4 bis 16 stehen paarweise kämmend mit auf einer nicht dargestellten Getriebeeingangswelle drehfest angeordneten Zahnrädern zur Umsetzung eines Sechs-Gang-Getriebes mit Rückwärtsgang in Eingriff. Zur Herstellung einer drehfesten Verbindung zwischen Getriebeausgangswelle und den Zahnrädern ist zwischen den Zahnrädern 4 und 6, 8 und 10, 12 und 14 jeweils eine Synchronisiereinheit 18 bis 22 angeordnet; analog dazu ist dem als Rückwärtsgang ausgebildeten Zahnrad 16 eine Synchronisiereinheit 24 zugeordnet. Die baugleich ausgebildeten Synchronisiereinheiten 18 bis 22 weisen jeweils einen über eine Verzahnung drehfest mit der Getriebeausgangswelle 2 verbundenen Synchronkörper 26 auf, in dessen Außenverzahnung Schaltklauen eingreifen, die auf der Innenseite von einer den Synchronkörper 26 umgreifenden Schaltmuffe 28 ausgebildet sind. Zwischen den Zahnrädern 4 bis 14 und den Synchronkörpern 26 sind Synchronringe 30 nach der Borg- Warner Bauart angeordnet, die, solange sich Schaltmuffe 28 und das der Schaltmuffe zugeordnete Zahnrad mit unterschiedlicher Drehzahl drehen, aufgrund des Reibmoments so weit verdreht werden, dass ihre Sperrzähne vor den Schaltklauen der Schaltmuffen 28 liegen und damit das Verschieben der Schaltmuffe verhindern. Auch dem Zahnrad 16 für den Rückwärtsgang ist eine entsprechende Synchronisiereinheit 24 mit Synchronkörper 26, Schaltmuffe 28 und Synchronring 30 zugeordnet. Parallel zur Getriebeausgangswelle 2 verlaufend ist eine Schaltstange 32 im nicht dargestellten Getriebegehäuse gelagert, auf der vier Schaltgabeln 34 längs verschieblich gelagert sind. Die Schaltgabeln 34 greifen dabei mit ihrem gabelförmigen Abschnitt in die den Zahnrädern 4 bis 14 zugeordneten Schaltmuffen 28 ein. Die Schaltgabeln 34 weisen einen rohrförmigen Fortsatz 36 auf, auf dem ein Schaltschlitten 38 längs verschieblich gelagert ist. Der Schaltschlitten 38 besteht aus einem Grundkörper 40 mit einem teilweise offen ausgebildeten Hülsenabschnitt 42, der auf dem rohrförmigen Fortsatz 36 der Schaltgabel 34 aufgeschoben und an seinem stirnseitigen Ende durch ein Verschluss-Deckelelement 44 abgeschlossen ist. Die lagerichtige Positionierung des Deckelelementes 44 zum Grundkörper 40 erfolgt über zwei Positionierungsstifte 46, wobei das Deckelelement 44 am Grundkörper 40 verschraubt ist. Sowohl der Grundkörper 40 als auch das Deckelelement 44 weisen eine Öffnung 48 und 50 auf, die als Lageraugen für die Lagerung des Schaltschlittens 38 auf dem rohrförmigen Fortsatz 36 der Schaltgabel 34 ausgebildet sind. Auf dem rohrförmigen Fortsatz 36 ist weiterhin ein als Spiralfeder ausgebildetes Schaltfederelement 52 aufgenommen, das an seinen beiden stirnseitigen Enden durch jeweils ein Federsitzring 54 und 56 auf dem rohrförmigen Fortsatz 36 zentriert ist, und nach außen hin von dem zumindest teilweise offen ausgebildeten Hülsenabschnitt 42 begrenzt ist. Auf dem rohrförmigen Fortsatz 36 sind zwei Ringnuten 36a und 36b ausgebildet, die zur Aufnahme der beiden Federsitzringe 54 und 56 vorgesehen sind. Da die beiden Federsitzringe 54 und 56 mit ihrem Innendurchmesser im Wesentlichen mit dem Außendurchmesser der beiden Ringnuten 36a und 36b übereinstimmen, sind die beiden Federsitzringe 54 und 56 geschlitzt ausgeführt, so dass sie auf den rohrförmigen Fortsatz 36 aufgeschoben werden können. Die Spiralfeder 52 stützt sich somit auf der einen Seite über den Federsitzring 54 größtenteils am Deckelelement 44 ab, während die andere Stirnseite der Spiralfeder 52 über den Federsitzring 56 an der Schaltgabel 34 abgestützt ist.

Zur Lagerung der Schaltgabeln 34 auf der Schaltstange 32 sind in den beiden Enden des rohrförmigen Fortsatzes 36 jeweils eine als Gleitlager ausgebildete Lagerbuchse 58 und 60 aufgenommen. Zur lagerichtigen Positionierung der Schaltgabeln 34 in ihrer Neutralposition ist in der Schaltgabel 34 eine senkrecht zur Lagerachse 62 verlaufende Sacklochbohrung 64 vorgesehen, in der eine Spiralfeder 66 und eine Kugel 68 aufgenommen sind. In der Neutralposition greift die Kugel mit einem Teil ihres Kreisdurchmessers in eine auf der Schaltstange 32 eingebrachte Ringnut ein.

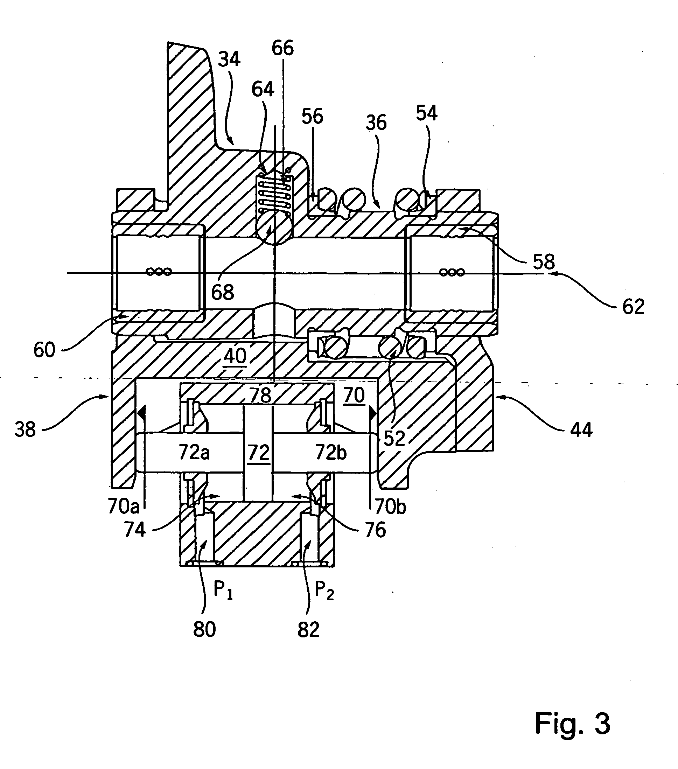

Wie insbesondere aus Fig. 1 und 3 ersichtlich, weist der Grundkörper 40 des Schaltschlittens 38 eine rechteckförmige Ausnehmung 70 auf, in die ein hydraulisch verstellbarer Kolben 72 eingreift. Der doppelseitig wirkende Hydraulikkolben 72 weist zwei Stößelelemente 72a und 72b auf, die mit ihren Stirnseiten an den Seitenflächen 70a und 70b der Ausnehmung 70 zum Anliegen kommen. Der Kolben 72 ist in einer mit zwei Druckräumen 74 und 76 versehenen Zylindereinheit 78 aufgenommen. Über eine entsprechende Hydraulikleitung 80 bzw. 82 kann den Druckräumen 74 und 76 wahlweise Hydrauliköl zugeführt werden, so dass wahlweise eine Verstellung des Kolbens 72 und damit des Schaltschlittens 38 nach links bzw. nach rechts bewirkt werden kann.

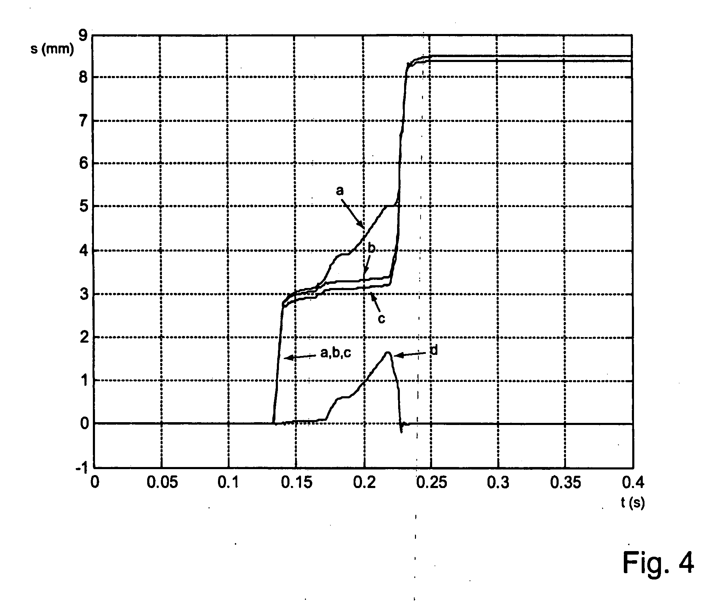

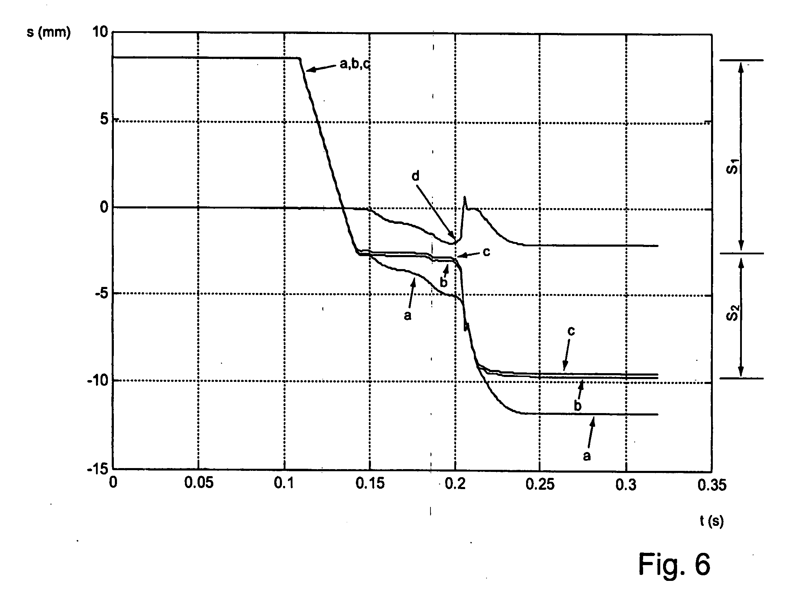

Im Nachfolgenden wird anhand der Diagramme gem. den Fig. 4 bis 6 der Ablauf eines Synchronisierungsvorganges näher erläutert:

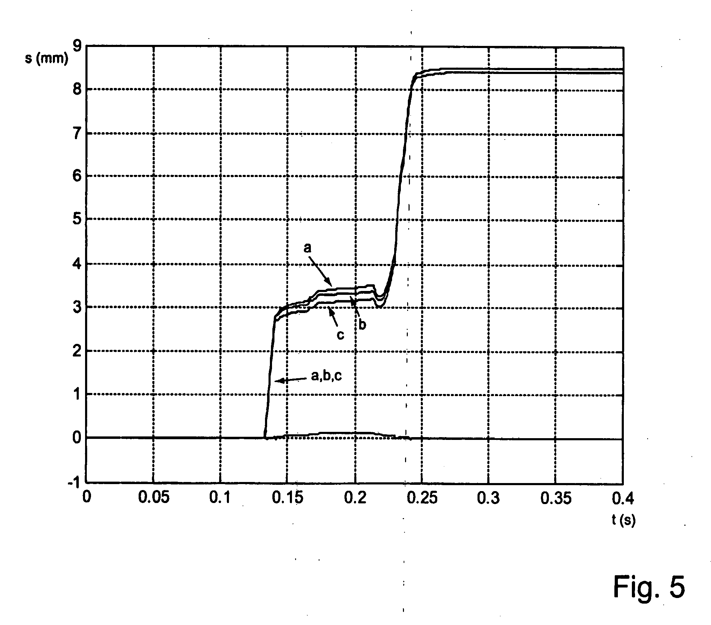

Über eine nicht näher dargestellte Hydrauliksteuerung wird der entsprechende Hydraulikkolben 72 z.B. für einen Gangwechsel von 2 nach 4 (bei dem Getriebe im vorliegenden Ausführungsbeispiel handelt es sich um ein sogenanntes Doppelkupplungsgetriebe, bei dem gerade und ungerade Gänge auf zwei Getriebeeingangswellen verteilt angeordnet sind) mit Hydrauliköl beaufschlagt. Damit wird über den Schaltschlitten 38 (dargestellt als Kurve a in den Fig. 4 bis 6) und die Schaltgabel 34 (dargestellt als Kurve b in den Fig. 4 bis 6) die Schaltmuffe 28 (dargestellt als Kurve c in den Fig. 4 bis 6) der Synchronisiereinheit 18 aus der Neutralposition nach rechts -bezogen auf die Darstellung in Fig. 1, bei der Zahnrad 4 den 2. Gang und Zahnrad 6 den 4. Gang präsentiert- über einen Weg s₁ verschoben. Nach dem Durchlaufen von s₁ beginnt der Synchronisierungsvorgang, bei dem auf bekannte Art und Weise durch das erzeugte Reibmoment die Synchronringe 30 ein weiteres Verschieben der Schaltmuffen verhindern. Wie anhand von Kurve d dargestellt, wird die Spiralfeder 52 während der Synchronisierung um ca. 3mm komprimiert bzw. verspannt. Nachdem ein Gleichlauf zwischen Schaltmuffe 28 und dem Zahnrad 6 hergestellt worden ist, beginnt das Durchschalten über den Weg S₂, bei dem die Schaltklauen der Schaltmuffe 28 in die Schaltverzahnung des Zahnrades 6 eingreifen und somit eine drehfeste Verbindung zwischen Zahnrad 6 und Getriebeausgangswelle bewirken. Durch die Freigabe der in der Spiralfeder 52 gespeicherten potentiellen Energie wird während des Durchschaltens des Ganges die Schaltgabel 34 und damit die Schaltmuffe 28 beschleunigt, so dass damit eine Verkürzung des Synchronisierungsvorgangs erreicht wird. In Fig. 4 ist der Synchronisierungsvorgang mit dem beschriebenen Schaltfederelement 52 dargestellt, während in Fig. 5 der Synchronisierungsvorgang ohne diese Federkraft dargestellt ist. Beim Vergleich der beiden Diagramme wird deutlich, dass durch die fast dreifach so hohe Verstellgeschwindigkeit der Schaltmuffe 28 eine Verkürzung des Synchronisierungsvorgangs und damit des Gangwechsels insgesamt erreichbar ist.

## Patentansprüche

1. Wechselgetriebe, insbesondere automatisiertes Schaltgetriebe für ein Kraftfahrzeug, mit mindestens einer Getriebeeingangs- und Getriebeausgangswelle (2), auf denen Zahnräder (4,6,8,10,12,14,16) angeordnet sind, die zur Ausbildung unterschiedlicher Gangstufen paarweise kämmend miteinander in Eingriff stehen, wobei auf der Getriebeeingangs- und/oder Getriebeausgangswelle (2) Synchronisiereinheiten (18,20,22,24) vorgesehen sind, über die eine drehfeste Verbindung von Getriebeeingangs- und/oder Getriebeausgangswelle (2) mit den Schalt bzw. Losrädern (4,6,8,10,12,14,16) der Zahnradpaarungen herstellbar ist, sowie mit mindestens einer Schaltstange (32), **dadurch gekennzeichnet, dass** auf der Schaltstange (32) Schaltgabeln (34) gelagert sind, die in Verbindungsorgane wie Schaltmuffen (28) der Synchronisiereinheiten (18,20,22,24) eingreifen, dass zur Betätigung jeder Schaltgabel (34) ein durch ein Schaltfederelement (52) federbelasteter Schaltschlitten (38) vorgesehen ist, wobei sowohl der Schaltschlitten (38) als auch das Schaltfederelement (52) auf der Schaltgabel (34) gelagert sind, und
**dass**
das Schaltfederelement (52) zwischen dem Schaltschlitten (38) und der Schaltgabel (34) derart angeordnet ist, dass zur Beschleunigung der Schaltgabel (34) nach einem Synchronisierungsvorgang das Schaltfederelement (52) während des Synchronisierungsvorgangs vorgespannt wird.

2. Wechselgetriebe nach Anspruch 1, **dadurch gekennzeichnet, dass** die Schaltgabel (34) einen rohrförmigen Fortsatz (36) aufweist, auf dem der Schaltschlitten (38) und das Schaltfederelement (52) gelagert sind.

3. Wechselgetriebe nach Anspruch 2, **dadurch gekennzeichnet, dass** zur Lagerung des Schaltfederelementes (52) auf dem rohrförmigen Fortsatz (36) an den beiden stirnseitigen Enden des Schaltfederelementes (52) jeweils ein Federsitzring (54, 56) vorgesehen ist.

4. Wechselgetriebe nach einem der vorhergehenden Ansprüche, **dadurch gekennzeichnet, dass** der Schaltschlitten (38) aus einem Grundkörper (40) und einem Verschlusselement (44) besteht.

5. Wechselgetriebe nach Anspruch 4, **dadurch gekennzeichnet, dass** das Schaltfederelement (52) zwischen einer Anschlagfläche der Schaltgabel (34) und zumindest teilweise dem Verschlusselement (44) des Schaltschlittens (38) abgestützt ist.

6. Wechselgetriebe nach Anspruch 4, **dadurch gekennzeichnet, dass** der Grundkörper (40) des Schaltschlittens (38) eine Ausnehmung (70) aufweist, in die zur Verschiebung des Schaltschlittens (38) ein Hydraulikkolben (72) eingreift.

7. Wechselgetriebe nach Anspruch 2, **dadurch gekennzeichnet, dass** die Schaltgabeln (34) auf der Schaltstange (32) längsverschieblich angeordnet sind und in den beiden Enden des rohrförmigen Fortsatzes (36) jeweils eine Lagerbuchse (60, 62) aufgenommen ist.

8. Wechselgetriebe nach einem der vorhergehenden Ansprüche, **dadurch gekennzeichnet, dass** sämtliche Synchronisierungseinheiten (18 bis 24) auf der Getriebeausgangswelle (2) vorgesehen sind und dass sämtliche Schaltgabeln (34) auf einer Schaltstange (32) gelagert sind.

9. Wechselgetriebe nach einem der vorhergehenden Ansprüche, **dadurch gekennzeichnet, dass** die Steifigkeit des Schaltfederelementes (52) und die Schaltkraft so ausgelegt ist, dass der Federweg (s) des Schaltfederelementes (52) maximal 5 mm beträgt.

10. Wechselgetriebe nach einem der vorhergehenden Ansprüche, **dadurch gekennzeichnet, dass** aufgrund des vorgespannten Schaltfederelementes (52) nach dem Synchronisierungsvorgang die Schaltgabel (34) beschleunigt wird.

## Claims

1. Variable-speed transmission, in particular automatic shift transmission for a motor vehicle, having at least one transmission input shaft and transmission output shaft (2) on which are arranged gearwheels (4, 6, 8, 10, 12, 14, 16) which, in order to form different gear stages, are in meshing engagement with one another in pairs, wherein synchronizing units (18, 20, 22, 24) are provided on the transmission input shaft and/or transmission output shaft (2), by means of which synchronizing units (18, 20, 22, 24) a rotationally fixed connection of the transmission input shaft and/or transmission output shaft (2) to the shift wheels or loose wheels (4, 6, 8, 10, 12, 14, 16) can be produced, and having at least one shift rod (32), **characterized in that** shift forks (34) are mounted on the shift rod (32), which shift forks (34) engage into connecting elements such as shift sleeves (28) of the synchronizing units (18, 20, 22, 24), **in that**, in order to actuate each shift fork (34), a shift carriage (38) which is spring-loaded by a shift spring element (52) is provided, with both the shift carriage (38) and the shift spring element (52) being mounted on the shift fork (34), and **in that** the shift spring element (52) is arranged between the shift carriage (38) and the shift fork (34) in such a way that, in order to accelerate the shift fork (34) after a synchronizing process, the shift fork element (52) is pre-stressed during the synchronizing process.

2. Variable-speed transmission according to Claim 1, **characterized in that** the shift fork (34) has a tubular projection (36) on which the shift carriage (38) and the shift spring element (52) are mounted.

3. Variable-speed transmission according to Claim 2, **characterized in that**, for the mounting of the shift spring element (52) on the tubular projection (36), in each case one spring seat ring (54, 56) is provided on the two face-side ends of the shift spring element (52).

4. Variable-speed transmission according to one of the preceding claims, **characterized in that** the shift carriage (38) is composed of a base body (40) and a closure element (44).

5. Variable-speed transmission according to Claim 4, **characterized in that** the shift spring element (52) is supported between a stop face of the shift fork (34) and at least partially the closure element (44) of the shift carriage (38).

6. Variable-speed transmission according to Claim 4, **characterized in that** the base body (40) of the shift carriage (38) has a recess (70) into which a hydraulic piston (72) engages in order to move the shift carriage (38).

7. Variable-speed transmission according to Claim 2, **characterized in that** the shift forks (34) are arranged in a longitudinally moveable fashion on the shift rod (32) and in each case one bearing bush (60, 62) is held in the two ends of the tubular projection (36).

8. Variable-speed transmission according too one of the preceding claims, **characterized in that** all the synchronizing units (18 to 24) are provided on the transmission output shaft (2) and **in that** all the shift forks (34) are mounted on one shift rod (32).

9. Variable-speed transmission according to one of the preceding claims, **characterized in that** the stiffness of the shift spring element (52) and the shift force is designed such that the spring travel (s) of the shift spring element (52) is a maximum of 5 mm.

10. Variable-speed transmission according to one of the preceding claims, **characterized in that** the shift fork (34) is accelerated on account of the pre-stressed shift spring element (52) after the synchronizing process.

## Revendications

1. Boîte de vitesses, notamment boîte automatique pour un véhicule automobile, avec au moins un arbre d'entrée de boîte et un arbre de sortie de boîte (2), sur lesquels sont disposés des pignons (4, 6, 8, 10, 12, 14, 16) qui engrènent entre eux par paires afin de former différents rapports de boîte, sachant que des unités de synchronisation (18, 20, 22, 24) sont prévues sur l'arbre d'entrée de boîte et/ou l'arbre de sortie de boîte (2), par l'intermédiaire desquelles une liaison en solidarité de rotation peut être réalisée entre l'arbre d'entrée de boîte et/ou l'arbre de sortie de boîte (2) et les pignons de sélection ou respectivement les pignons fous (4, 6, 8, 10, 12, 14, 16) des paires de pignons, ainsi qu'avec au moins une tringle de sélection (32), **caractérisée en ce que** des fourchettes de sélection (34) sont montées sur la tringle de sélection (32), qui s'engagent dans des organes de liaison tels que des manchons de sélection (28) des unités de synchronisation (18, 20, 22, 24), **en ce qu'**un coulisseau de sélection (38) sollicité élastiquement par un élément de ressort de sélection (52) est prévu pour l'actionnement de chaque fourchette de sélection (34), sachant qu'à la fois le coulisseau de sélection (38) et l'élément de ressort de sélection (52) sont montés sur la fourchette de sélection (34), et **en ce que** l'élément de ressort de sélection (52) est disposé entre le coulisseau de sélection (38) et la fourchette de sélection (34) de telle sorte qu'afin d'accélérer la fourchette de sélection (34) à la suite d'un processus de synchronisation, l'élément de ressort de sélection (52) est précontraint pendant le processus de synchronisation.

2. Boîte de vitesses selon la revendication 1, **caractérisée en ce que** la fourchette de sélection (34) présente un prolongement tubulaire (36) sur lequel sont montés le coulisseau de sélection (38) et l'élément de ressort de sélection (52).

3. Boîte de vitesses selon la revendication 2, **caractérisée en ce qu'**une bague d'assise élastique respective (54, 56) est prévue aux deux extrémités frontales de l'élément de ressort de sélection (52) pour le montage de l'élément de ressort de sélection (52) sur le prolongement tubulaire (36).

4. Boîte de vitesses selon l'une des revendications précédentes, **caractérisée en ce que** le coulisseau de sélection (38) est constitué d'un corps de base (40) et d'un élément de fermeture (44).

5. Boîte de vitesses selon la revendication 4, **caractérisée en ce que** l'élément de ressort de sélection (52) est soutenu entre une surface de butée de la fourchette de sélection (34) et au moins pour partie l'élément de fermeture (44) du coulisseau de sélection (38).

6. Boîte de vitesses selon la revendication 4, **caractérisée en ce que** le corps de base (40) du coulisseau de sélection (38) présente un évidement (70) dans lequel s'engage un piston hydraulique (72) pour le coulissement du coulisseau de sélection (38).

7. Boîte de vitesses selon la revendication 2, **caractérisée en ce que** les fourchettes de sélection (34) sont disposées à coulissement longitudinal sur la tringle de sélection (32), et une douille de palier respective (60, 62) est reçue dans les deux extrémités du prolongement tubulaire (36).

8. Boîte de vitesses selon l'une des revendications précédentes, **caractérisée en ce que** toute les unités de synchronisation (18 à 24) sont prévues sur l'arbre de sortie de boîte (2), et **en ce que** toutes les fourchettes de sélection (34) sont montées sur une tringle de sélection (32).

9. Boîte de vitesses selon l'une des revendications précédentes, **caractérisée en ce que** la rigidité de l'élément de ressort de sélection (52) et la force de sélection sont conçues de telle sorte que la course élastique (s) de l'élément de ressort de sélection (52) est égal au maximum à 5 mm.

10. Boîte de vitesses selon l'une des revendications précédentes, **caractérisée en ce que** la fourchette de sélection (34) est accélérée à la suite du processus de synchronisation sous l'action de l'élément de ressort de sélection précontraint (52).
